# EUROPÄISCHE PATENTSCHRIFT

(11) **EP 1 828 282 B1**
(45) Veröffentlichungstag und Bekanntmachung des Hinweises auf die Patenterteilung: **06.10.2010**
(21) Anmeldenummer: 05808204.1
(22) Anmeldetag: 24.11.2005
(51) Int. Cl.: C08G 73/02, B41N 3/08

(54) **VERWENDUNG VON POLYMEREN, WELCHE MIT SÄUREGRUPPEN MODIFIZIERTE AMINOGRUPPEN AUFWEISEN, ZUR HERSTELLUNG VON FEUCHTMITTELN ODER FEUCHTMITTELKONZENTRATEN SOWIE IN FEUCHTMITTELUMLÄUFEN FÜR DEN OFFSETDRUCK**
USE OF POLYMERS COMPRISING AMINO GROUPS MODIFIED BY ACID GROUPS FOR PRODUCING HUMIDIFYING AGENTS OR HUMIDIFYING AGENT CONCENTRATES, IN ADDITION TO HUMIDIFYING AGENT CIRCUITS FOR OFFSET PRINTING
UTILISATION DE POLYMERES COMPORTANT DES GROUPES AMINO MODIFIES PAR DES GROUPES ACIDES POUR PRODUIRE DES AGENTS D'HUMIDIFICATION OU DES CONCENTRES D'AGENT D'HUMIDIFICATION, AINSI QUE DANS DES CIRCUITS D'AGENT D'HUMIDIFICATION POUR L'IMPRESSION OFFSET

(30) Priorität: 26.11.2004 DE 102004057294
(43) Veröffentlichungstag der Anmeldung: 05.09.2007
(73) Patentinhaber: Flint Group Germany GmbH, 70469 Stuttgart (DE)
(72) Erfinder: THIEM, Roland, 71711 Steinheim (DE); BECKER, Heike, 68163 Mannheim (DE); SCHOLTISSEK, Martin, 67157 Wachenheim (DE); LORENZ, Wolfgang, 63128 Dietzenbach (DE)
(74) Vertreter: Huhn, Michael
(86) Internationale Anmeldenummer: PCT/EP2005/012570
(87) Internationale Veröffentlichungsnummer: WO 2006/056439

(56) Entgegenhaltungen:
- EP-A- 0 091 601
- EP-A- 0 490 231
- WO-A-97/40087
- DE-A1- 4 401 619
- US-A- 4 116 896

## Beschreibung

Die Erfindung betrifft die Verwendung von Polymeren, welche mit Säuregruppen modifizierte Aminogruppen umfassen, zur Herstellung von Feuchtmitteln für den Offsetdruck. Sie betrifft weiterhin ein Verfahren zum Drucken mittels Offsettechnik, bei dem man ein Feuchtmittel einsetzt, das Polymer enthält, welches mit Säuregruppen modifizierte Aminogruppen umfasst.

Beim Offsetdruck wird eine Druckplatte eingesetzt, die im Wesentlichen keine Höhenunterschiede aufweist. Vielmehr weisen die Bild- und die Nichtbildstellen einer Offsetdruckplatte unterschiedliche Benetzungseigenschaften auf, d.h. hydrophobe und hydrophile Bereiche. Eine Offsetdruckplatte umfasst üblicherweise einen Träger, der mit einer geeigneten hydrophoben Beschichtung versehen ist. An den Nichtbildstellen wird die lichtempfindliche Schicht entfernt, so dass der hydrophile Schichtträger freigelegt wird. Zum Offsetdruck wird eine Druckfarbe auf Ölbasis eingesetzt. Hierbei sind die hydrophoben Bereiche der Druckplatte mit Druckfarbe benetzbar, und die hydrophilen Bereiche sind nicht mit Druckfarbe benetzbar. Nähere Einzelheiten zur Offsetdrucktechnik sind beispielsweise dem Römpp-Lexikon "Lacke und Druckfarben", Georg Thieme Verlag, Stuttgart, New York 1998, S. 167 bis 170 zu entnehmen.

Für den Druckprozess wird beispielsweise eine Offsetdruckplatte auf den Druckzylinder gespannt. Den Druckzylinder berühren zwei weitere Walzen, die sogenannte Farbwalze und die sogenannte Feuchtwalze.

Mittels der Farbwalze wird eine Druckfarbe auf Ölbasis auf die Druckplatte übertragen, und mittels der Feuchtwalze wird das sogenannte Feuchtmittel auf die Plattenoberfläche aufgetragen. Bei dem Feuchtmittel handelt es sich um Wasser, in dem unterschiedliche Hilfsmittel gelöst sind. Das Feuchtmittel wird in der Regel durch Verdünnen eines Feuchtmittelkonzentrats mit Wasser hergestellt. Zusätzliche Additive können gegebenenfalls separat dem Wasser oder dem Feuchtmittel anschließend zudosiert werden.

Das Feuchtmittel hat die Aufgabe, auf den nicht druckenden Teilen der Druckplatte einen stabilen Feuchtigkeitsfilm zu erzeugen, der die Annahme der Offsetdruckfarbe auf diesen Teilen der Druckform verhindert. Dabei ist es unerheblich, ob beim Aufbringen von Feuchtmittel und Farbe auf die Druckplatte bei jeder Umdrehung des Plattenzylinders erst das Feuchtmittel und dann die Farbe aufgetragen werden, oder dies in umgekehrter Reihenfolge passiert. Vom Druckzylinder aus wird die bildmäßig aufgetragene Farbe zunächst auf den sogenannten Gummituchzylinder und von dort aus auf das Papier gedruckt.

Von der Feuchtauftragswalze aus wird das Feuchtmittel sowohl in die druckenden wie die nicht druckenden Bereiche der Druckplatte übertragen. Die Menge des übertragenen Feuchtmittels lässt sich steuern, beispielsweise über die Geschwindigkeit der Schöpfwalze im Feuchtwerk. In den nicht druckenden Bereichen sorgt das Feuchtmittel für die Hydrophilierung der Bereiche. In den druckenden Bereichen bildet sich aus dem Feuchtmittel und der Druckfarbe eine Farb-Wasser-Emulsion.

Ein gutes Druckergebnis beim Offsetdruck hängt ganz wesentlich von der Menge des Feuchtmittels ab, das auf die Druckplatte übertragen wird.

Wird zu wenig Feuchtmittel übertragen, dann stoßen die hydrophilen Bereiche die Druckfarbe nicht in ausreichendem Maße ab, so dass auch noch nichtdruckende Bereiche zumindest teilweise mit Druckfarbe benetzt werden und somit in unerwünschter Weise Farbe auf das Papier übertragen wird. Der Drucker bezeichnet diese Druckstörung als Tonen oder Schmieren. Wird zu viel Feuchtmittel übertragen, dann wird zu viel Wasser in die Druckfarbe einemulgiert, so dass die rheologischen Eigenschaften der Druckfarbe negativ beeinflusst werden. Dies äußert sich beispielsweise in abnehmender Farbstärke oder in Farbübertragungsproblemen auf den Gummituchzylinder oder das Papier.

Den Bereich, in dem eine ausreichende Menge an Feuchtmittel übertragen wird, um die abstoßende Wirkung zu erzielen, aber andererseits noch nicht zu viel, nennt der Fachmann "Wasserfenster". Das "Wasserfenster" sollte für stabiles Drucken möglichst breit sein, so dass nicht schon kleine Veränderungen der Wasserführung zu unerwünschten, Papierausschuss zur Folge habenden Störungen im Druckprozess führen.

Generell ist es wünschenswert, mit möglichst geringen Mengen an Feuchtmittel eine ausreichende Abstoßung zu erzielen, um ein zu starkes Emulgieren der Farbe und eine beispielsweise damit einhergehende Abnahme der Farbstärke zu vermeiden.

Es ist bekannt, als Hilfsmittel in Feuchtmitteln wasserlösliche filmbildende Kolloide oder Polymere einzusetzen. Filmbildende Kolloide und wasserlösliche Polymere haben die Aufgabe, den Aufbau eines stabilen Wasserfilms auf der nicht druckenden Schicht der Druckplatte zu unterstützen, damit während des Drucks konstante Druckqualität erreicht wird, und dass bei Maschinenstillstand sofort ohne viel Anlaufmakulatur weitergedruckt werden kann. Des Weiteren dient ein Polymer wie Gummi Arabicum als Plattenschutz gegen mechanische Beschädigung beim Lagern und Archivieren von Druckplatten.

DE 197 19 936 offenbart die Verwendung von Gummi Arabicum zur Herstellung von Feuchtmitteln. EP 1099566 und EP 1099567 offenbaren Gummi Arabicum, verschiedene Stärkederivate, Alginate, Cellulosederivate und deren Modifikationen, Polyethylenglykole und deren Copolymere, Polyvinylalkohole und seine Derivate, Polyacrylamide, Polyacrylsäure, Copolymerisate auf Basis von Maleinsäureanhydrid und Polyvinylmethylether, Polymerisate auf Basis von Styrolsulfonsäure oder Polyvinylpyrrolidon.

Weiterhin ist es bekannt, Derivate von Cellulose wie beispielsweise Carboxymethylcellulose, Hydroxyethylcellulose, Hydroxypropylcellulose, Methylcellulose oder Kombinationen davon einzusetzen. Beispielhaft sei auf JP-A 02-292092, JP-A 07-125472, JP-A 2003-276357 oder JP-A 2004-160869 verwiesen.

Aus DE-A-4401619 und US-A-4116896 ist weiterhin die Verwendung von Säuregruppen tragenden Polymeren zur Herstellung von Feuchtmitteln, Feuchtmittelkonzentraten für den Offsetdruck sowie ihre Verwendung in Feuchtmittelkreisläufen beim Offsetdruck bekannt.

Als Polymer für Feuchtmittel am weitesten verbreitet ist Gummi arabicum. Gummi arabicum ist ein Gemisch verschiedener Polysaccharide, darunter L-Arabinose, L-Rhamnose, D-Galactose und D-Glucuronsäure und wird als Harz aus dem Pflanzensaft verschiedener Akazien- und Mimosenarten-Arten gewonnen. Bei Verwendung von Gummi arabicum werden aber relativ hohe Mengen an Wasser benötigt, um einen stabilen Feuchtigkeitsfilm auf der Offsetdruckplatte zu erreichen. Weitere Schwachpunkte von Gummi arabicum sind seine schäumenden und schaumstabilisierenden Eigenschaften, seine starke Eigenfarbe und seine vergleichsweise schlechte Löslichkeit. Da es sich um ein Naturprodukt handelt, liegt es in wechselnder Qualität vor. Für sogenannte Bürsten- oder Schleuderfeuchtwerke, wie sie im Zeitungsdruck häufig eingesetzt werden, ist die Erzeugung und Stabilisierung von Schaum im Feuchtmittel bei der Aufbringung auf die Druckplatte unbedingt zu vermeiden, da es sonst zu ungleichmäßiger Feuchtung und somit zu Druckstörungen kommen kann.

Andere der genannten Polymere haben die negative Eigenschaft, dass sie klebrige Beläge auf der Druckplatte und dem Gummituchzylinder hinterlassen können. Dies führt zur Ansammlung von Papierstaub und Farbpartikeln, was eine regelmäßige Reinigung von Druckplatte oder Gummituchzylinder erforderlich macht und einen Zeitverlust beim Druckprozess bedeutet. Weiterhin dürfen die verwendeten Polymere keine schädigenden Einflüsse auf die Druckplatte, besonders auf die bildgebenden Stellen ausüben.

Feuchtmittel für den Offsetdruck enthalten neben Wasser weiterhin üblicherweise eine Vielzahl verschiedenster Hilfsmittel, wie beispielsweise Puffersysteme, Tenside, Entschäumer, Biozide sowie Korrosionsinhibitoren.

Außerdem werden im Regelfalle kurzkettige Alkohole als Hilfsmittel eingesetzt, insbesondere Isopropanol, Ethanol oder Mischungen davon. Ebenso werden höher siedende Glykolether als Ersatzstoffe für Isopropanol verwendet. Feuchtmittel können bis zu 30 Gew.-% Isopropanol oder anderer, kurzkettiger Alkohole enthalten. Isopropanol erhöht unter anderem die Viskosität des Feuchtmittels; dies erleichtert es, viel Wasser auf die Platte zu übertragen. Weiterhin trägt es zu stabilen Emulgierverhältnissen bei der Emulgierung von Wasser in Druckfarbe bei. Allerdings ist die Freisetzung von organischen Lösemitteln in Druckereien im Allgemeinen unerwünscht. Daher ist es äußerst wünschenswert, ein Feuchtmittel bereit zu stellen, bei welchem der Isopropanol-Anteil möglichst gering ist oder sogar völlig darauf verzichten werden kann.

Aufgabe der Erfindung war es, ein verbessertes Feuchtmittel für den Offsetdruck bereitzustellen, bei dem ein stabiler Wasserfilm bereits bei einem geringeren Wasserübertrag erhalten werden kann und bei dem die notwendige Menge an Isopropanol oder von Ersatzstoffen für Isopropanol ohne Verschlechterung der Ergebnisse zumindest deutlich reduziert werden kann.

Dementsprechend wurde die Verwendung von Polymeren, welche mit Säuregruppen modifizierte Aminogruppen umfassen, zur Herstellung von Feuchtmitteln für den Offsetdruck gefunden. Weiterhin wurde ein Verfahren zum Drucken mittels Offsettechnik gefunden, bei dem ein Feuchtmittel eingesetzt wird, welches Polymer enthält, das mit Säuregruppen modifizierte Aminogruppen umfasst.

Zu der Erfindung ist im Einzelnen das folgende auszuführen:

Zur Herstellung des Feuchtmittels für das erfindungsgemäße Verfahren zum Offsetdruck werden Polymere P eingesetzt, welche mit Säuregruppen modifizierte Aminogruppen umfassen. Bei den Polymeren P kann es sich um geradkettige oder verzweigte Polymere handeln.

Die Polymere P können auch zur Herstellung von Feuchtmittelkonzentraten eingesetzt werden, welche zum Einsatz als Feuchtmittel verdünnt werden, oder sie können auch in Feuchtmittelkreisläufen verwendet werden.

Bei den mit Säuregruppen modifizierten Aminogruppen handelt es sich um Struktureinheiten der allgemeinen Formel ausgewählt aus der Gruppe von (I), (II) und (III).

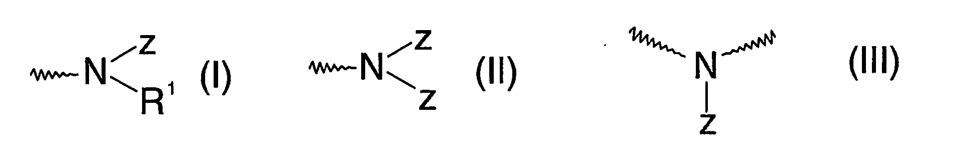

Die Struktureinheiten können hierbei ein Teil einer Polymerkette sein, wie im Falle (III), oder sie können seiten- oder endständig zur Polymerkette angeordnet sein, wie im Falle (I) oder (II). Unter dem Begriff "Polymerkette" soll sowohl die Polymerhauptkette verstanden werden, d.h. die längste, das Polymer bildende Kette, sowie auch kürzere oder längere Verzweigungen der Polymerkette.

Die Polymerkette ist aus durch kovalente Bindungen aneinandergereihten Kohlenstoffatomen aufgebaut, wobei diese Kohlenstoffkette jedoch durch Heteroatome, insbesondere Stickstoff sowie gegebenenfalls auch Sauerstoff oder andere funktionelle Gruppen unterbrochen sein kann. Bevorzugt ist die Kette durch N-Atome sowie gegebenenfalls O-Atome unterbrochen.

Das Polymer kann neben den Struktureinheiten (I), (II) und/oder (III) auch noch weitere funktionelle Gruppen umfassen. Hierbei kann es sich vor allem um primäre, sekundäre und/oder tertiäre Aminogruppen handeln. Es können auch noch andere funktionelle Gruppen vorhanden zu sein, vorausgesetzt es treten bei der Verwendung als Feuchtmittel keine negativen Eigenschaften auf. Zu nennen sind hier insbesondere Ethergruppen -O- sowie OH-Gruppen. Bevorzugt sind neben den Aminogruppen und den funktionalisierten Aminogruppen keine, oder zumindest im Wesentlichen keine weiteren funktionellen Gruppen vorhanden.

Die Gruppe Z steht für eine Säuregruppen aufweisende Struktureinheit, und R¹ steht für H oder einen geradkettigen oder verzweigten, vorzugsweise 1 bis 20 C-Atome umfassenden Kohlenwasserstoffrest, der gegebenenfalls auch noch weitere Substituenten oder Heteroatome aufweisen kann. Bevorzugt handelt es sich bei R¹ um H.

Die Säuregruppen aufweisende Struktureinheit Z kann eine oder mehrere Säuregruppen R² umfassen. Beispiele geeigneter Säuregruppen umfassen insbesondere Carboxylgruppen -COOH, Sulfonsäuregruppen -SO₃H und Phosphonsäuregruppen -PO₃H₂, es kann sich aber auch um andere Säuregruppen handeln. Bevorzugt handelt es sich um -COOH-Gruppen. Die Säuregruppen können als freie Säure vorliegen, es kann sich aber auch um Salze der Säuren, insbesondere Alkalimetallsalze und/oder Erdalkalimetallsalze handeln.

Die Säuregruppen R² sind in der Regel über eine verknüpfende Gruppe X mit dem Stickstoffatom verbunden. In diesem Falle weist Z die allgemeine Formel -XR²ₙ auf, wobei es sich bei X um einen n-wertigen organischen Rest und bei n um eine natürliche Zahl größer oder gleich 1 handelt. Bevorzugt ist n 1 bis 5 und besonders bevorzugt 1 oder 2.

Bei dem n-wertigen organischen Rest X kann es sich um einen geradkettigen oder verzweigten, aliphatischen, aromatischen oder araliphatischen Rest handeln. Bevorzugt handelt es sich um einen aliphatischen Rest, welcher 1 bis 10 C-Atome, bevorzugt 1 bis 5, besonders bevorzugt 1 bis 3 C-Atome und ganz besonders bevorzugt 1 oder 2 C-Atome umfasst. Besonders bevorzugt sind 2-wertige organische Reste. Besonders bevorzugte Gruppen sind Methylen- oder 1,2-Ethylengruppen.

Beispiele bevorzugter Struktureinheiten Z umfassen -CH₂CH₂SO₃H, -CH₂SO₃H, -CH₂CH₂PO₃H₂, -CH₂PO₃H₂, -CH₂COOH, -CH₂CH₂COOH, -CH(COOH)CH₂-COOH, -CH₂CH(CH₃)COOH und -CH₂CH(CH₂COOH)COOH. Die Struktureinheiten können als freie Säuren oder auch in Form von Salzen, wie beispielsweise Alkalimetallsalzen vorliegen. Sie können weiterhin in Form von inneren Salzen aus den Säuregruppen sowie den modifizierten und unmodifizierten Aminogruppen des Polymers vorliegen. Besonders bevorzugt sind -CH₂-COOH und -CH₂CH₂COOH.

Die Anzahl modifizierter Aminogruppen und/oder unmodifizierter Aminogruppen in den verwendeten Polymeren wird vom Fachmann je nach den gewünschten Eigenschaften des Feuchtmittels bestimmt. Die Anzahl sollte aber mindestens so groß sein, dass die Polymere in den im Feuchtmittel eingesetzten Konzentrationen klar löslich sind. Im Allgemeinen beträgt das Verhältnis von C-Atomen zu N-Atomen im Polymer 6:1 bis 1,5:1 und beispielsweise ca. 4:1, ohne dass die Erfindung damit auf diesen Bereich beschränkt sein soll.

Das Gewichtsmittel M_{w} der zur Herstellung des Feuchtmittels eingesetzten Polymere P wird vom Fachmann je nach den gewünschten Eigenschaften des Feuchtmittels gewählt. Bewährt hat sich im Allgemeinen ein Molekulargewicht M_{w} von 500 bis 2.000.000 g/mol, bevorzugt 1000 bis 1.500.000 g/mol, besonders bevorzugt 2000 bis 1.200.000 g/mol und ganz besonders bevorzugt 10.000 bis 1.200.000 g/mol und beispielsweise 50.000 oder 480.000 g/mol. Dabei wurde das Gewichtsmittel mittels Lichtstreuung ermittelt.

Die beschriebenen Polymere und ihre Herstellung sind prinzipiell bekannt. Beispielhaft sei hierbei auf EP-A 490 231 und WO 97/40087 verwiesen.

Die erfindungsgemäß verwendeten Polymere P lassen sich beispielsweise herstellen, indem man primäre und/oder sekundäre Aminogruppen aufweisende Polymere mittels geeigneter Reagenzien funktionalisiert. Die vorhandenen Aminogruppen werden hierbei ganz oder teilweise in Struktureinheiten (I), (II) und/oder (III) umgewandelt. Der Funktionalisierungsgrad kann zwischen 1 und 100 % liegen, bevorzugt liegt er zwischen 50 und 100, besonders bevorzugt zwischen 70 und 100 %.

Als Ausgangsmaterial für die Modifizierung können prinzipiell alle Arten aminogruppenhaltigen Polymere eingesetzt werden. Diese können neben den Aminogruppen auch noch weitere funktionelle Gruppen aufweisen, vorausgesetzt diese beeinflussen nicht die Modifizierung und haben keine negativen Auswirkungen.

Als Ausgangsmaterial geeignet sind beispielsweise Polyvinylamine. Es kann sich hierbei um Homopolymere von Vinylamin handeln oder auch um Copolymere aus Vinylamin und anderen Comonomeren. Geeignete Comonomere sind beispielsweise monoolefinisch ungesättigte Carbonsäuren, wie z.B. Acrylsäure, Methacrysäure, Maleinsäure, Vinylamide wie Vinylpyrrolidon, Vinylcaprolactam, weiterhin Vinylimidazol, Vinylacetat, Olefine, Vinylalkohol, Vinylsulfonsäure und Vinylphosphonsäure. Die Menge an Comonomeren sollte aber im Regelfalle 30 Gew.-% bezüglich der Menge aller Monomere nicht überschreiten. Bevorzugt sind Vinylamin-Homopolymere.

Weiterhin geeignet sind Polyalkylenimine, wie beispielsweise Polypropylenimin, Polyethylenimin oder Copolymere von Propylenimin und Ethylenimin. Bevorzugt sind Polyethylenimine.

Weiterhin geeignet sind aminogruppenhaltige Polymere, welche Polyalkylenpolyamineinheiten, wie Diethylentriamin, Triethylentetramin, Tetraethylenpentamin, Pentaethylenhexamin, Diaminopropylenethylendiamin, Trisaminopropylamin und Polyethylenimine umfassen, welche mittels anderer Monomerer miteinander verknüpft sind. Es können beispielsweise Polyamidoamine hergestellt werden, indem man die besagten Polyalkylenpolyamineinheiten mit C₄-C₁₀-Dicarbonsäuren verknüpft. Geeignete Dicarbonsäuren sind beispielsweise Bernsteinsäure, Maleinsäure, Adipinsäure, Glutarsäure, Korksäure, Sebacinsäure oder Terephthalsäure oder Derivate davon, wie beispielsweise deren Ester oder Anhydride.

Entsprechend können Polyetheramine eingesetzt werden. Verbindungen dieser Art sind beispielsweise aus DE-A 29 16 356 bekannt. Die Polyetheramine können durch Kondensation der besagten Polyalkylenpolyamineinheiten mit Chlorhydrinethern bei erhöhten Temperaturen erhalten werden

Es können auch Polymere eingesetzt werden, bei denen ein geeignetes Ausgangspolymer mit Ethylenimin umsetzt. Hierbei entstehen Propfcopolymere, welche Polyethylenimineinheiten enthalten. Geeignete Ausgangsmaterialien umfassen beispielsweise die oben erwähnten Polyamidoamine, Polyetheramine oder Polyvinylamine.

Die aminogruppenhaltigen Polymere können vor dem Einsatz auch noch modifiziert werden. Sie können beispielsweise mit Alkylierungsmitteln umgesetzt werden, so dass ein Teil der Aminogruppen alkyliert wird. Ein geeignetes Alkylierungsmittel ist ein Alkylbromid der allgemeinen Formel R¹-Br, wobei R¹ eingangs definiert wurde.

Die als Ausgangsmaterial eingesetzten Polymere P können auch noch vernetzt werden. Es kann sich hierbei selbstverständlich nur um eine teilweise Vernetzung handeln. Es muss immer ein ausreichender Anteil Aminogruppen verbleiben. Der Vernetzungsgrad kann vom Fachmann je nach den gewünschten Eigenschaften des Feuchtmittels gewählt werden, vorausgesetzt es werden keine negativen Eigenschaften erhalten. Insbesondere sollte eine ausreichende Wasserlöslichkeit des Polymers erhalten bleiben. Im Regelfalle sollten nicht mehr als 2 % der im Ausgangspolymer vorhandenen Aminogruppen mit dem Vernetzer reagieren. Bevorzugt sind <1 % der Stickstoffe mit dem Vernetzer umgesetzt.

Die Vernetzung wird im Regelfalle wie hier beschrieben vorteilhaft vor der Modifizierung vorgenommen. Es soll aber nicht ausgeschlossen sein, die Vernetzung in Spezialfällen erst nach dem Modifizieren vorzunehmen.

Als Vernetzer geeignet sind beispielsweise mindestens bifunktionelle Vernetzer, die als funktionelle Gruppen eine Halogenhydrin-, Glycidyl-, Aziridin- oder Isocyanat-Einheit oder ein Halogenatom aufweisen. Beispiele geeigneter Vernetzer umfassen Epihalogenhydrine wie beispielsweise Epichlorhydrin oder α, ω- oder vicinale Dichloralkane, zum Beispiel 1,2-Dichlorethan, 1,2-Dichlorpropan, 1,3-Dichlorpropan, 1,4-Dichlorbutan und 1,6-Dichlorhexan.

Besonders geeignet zur Ausführung der Erfindung sind Vernetzer, die ausgehend von mindestens zweiwertigen Alkoholen hergestellt werden können. Beispiele umfassen Glycerin, ethoxylierte oder propoxylierte Glycerine, Polyglycerine mit 2 bis 15 Glycerin-Einheiten, ethoxylierte und/oder propoxylierte Polyglycerine sowie Polyalkylenglykole. Geeignete Polyalkylenglykole sind zum Beispiel Polyethylenglykol, Polypropylenglykol und Polybutylenglykole sowie Blockcopolymerisate von C₂- bis C₄-Alkylenoxiden. Die mittleren Molmassen (M_{w}) der Polyalkylenglykole betragen im Allgemeinen bei 100 bis 6000, bevorzugt 300 bis 2000 g/mol.

Aus den genannten, mehrfunktionellen Alkoholen können durch Umsetzung mit Epichlorhydrin Vernetzer erhalten werden, die mindestens zwei Chlorhydrin-Einheiten aufweisen, und hieraus durch Behandlung mit Basen α,ω-bis(Epoxide). Nähere Einzelheiten zu derartigen Vernetzern sind beispielsweise in US 4,144,123 oder DE-A 29 16 356 beschrieben. α,ω-Dichlorether, wie beispielsweise α,ω-Dichlorpolyalkylenglykole, lassen sich aus den genannten mehrfunktionellen Polyalkoxylkoholen nach dem von EP-A 0 025 515 offenbarten Verfahren herstellen.

Des Weiteren sind Vernetzer geeignet, die blockierte Isocyanatgruppen enthalten, zum Beispiel Trimethylhexamethylendiisocyanat blockiert mit 2,2,3,6-Tetramethylpiperidinon-4. Diese Vernetzer sind zum Beispiel aus DE-A 40 28 285 bekannt. Des Weiteren sind Aziridin-Einheiten enthaltende Vernetzer auf Basis von Polyethern oder substituierten Kohlenwasserstoffen, zum Beispiel 1,6-bis-N-Aziridinohexan geeignet.

Selbstverständlich können auch Gemische mehrerer unterschiedlicher Vernetzer eingesetzt werden, vorausgesetzt, diese sind untereinander verträglich. Besonders bevorzugt werden als Vernetzer Epihalohydrine, bevorzugt Epichlorhydrin, α,ω-bis-(Chlorhydrin)Polyalkylenglykolether, α,ω-bis(Epoxide) der Polyalkylenglykolether und/oder Bisglycidylether der Polyalkylenglykole eingesetzt.

Die Vernetzung kann nach dem Fachmann bekannten Verfahren erfolgen. Im Allgemeinen erfolgt die Vernetzung bei einer Temperatur von 10 bis 200 °C, bevorzugt 30 bis 100 °C. Die Umsetzung wird üblicherweise bei Normaldruck durchgeführt. Die Reaktionszeiten sind abhängig von den eingesetzten aminogruppenhaltigen Polymeren und Vernetzern. Im Allgemeinen beträgt die Reaktionsdauer 0,5 bis 20 h, bevorzugt 1 bis 10 h. Die Vernetzung wird im allgemeinen in wässriger Lösung vorgenommen.

Das erhaltene Produkt kann isoliert werden oder direkt, ohne Isolierungsschritt mit den Gruppen Z modifiziert werden.

Methoden zur Modifizierung mit den Gruppen Z sind dem Fachmann bekannt und beispielsweise in EP-A 490 231 und WO 97/40087 offenbart.

Ganz besonders bevorzugt handelt es sich bei den verwendeten Polymeren um wasserlösliche, carboxyalkylierte Aminogruppen umfassende Polymere. Es kann sich hierbei insbesondere um carboxymethylierte Gruppen oder carboxyethylierte Gruppen handeln. Diese können beispielsweise dadurch erhalten werden, indem man
a) wasserlösliche, Aminogruppen enthaltende Polymere mit mindestens einem Aldehyd und einem Alkalicyanid oder einem Cyanhydrin aus einem Aldehyd und einem Alkalicyanid in wässriger Lösung umsetzt (siehe z.B. WO 97/40087), oder
b) wasserlösliche, Aminogruppen enthaltende Polymere mit α,β-ungesättigten Verbindungen im Sinne einer Michaeladdition umsetzt (siehe z.B. DE 42 44 194). Beispiele geeigneter α,β-ungesättigter Verbindungen umfassen monoethylenisch ungesättigte Carbonsäuren wie Acrylsäure, Methacrylsäure, Dimethacrylsäure, Ethylacrylsäure, Allylessigsäure, Vinylessigsäure, Maleinsäure, Fumarsäure, Ithaconsäure, Methylenmalonsäure, Ölsäure, Linolensäure, aber auch Vinylphosphonsäure und Vinylsulfonat.

Bevorzugt werden Polymere P verwendet, die durch Modifizierung von Polyvinylamin und/oder Polyethylenimin erhältlich sind.

Die modifizierten Polymere P können nach der Modifizierung isoliert und gegebenenfalls gereinigt werden. Da die Modifizierung im Regelfalle in wässriger Lösung vorgenommen wird ist es aber auch möglich, die erhaltene Lösung des Polymers unmittelbar zur Formulierung des Feuchtmittels oder des Feuchtmittelkonzentrates einzusetzen.

Bei dem für das Feuchtmittel verwendeten Lösemittel handelt es sich im Regelfalle um Wasser. Das Feuchtmittel kann darüber hinaus aber noch organische, mit Wasser mischbare Lösemittel enthalten. Hierbei kommen insbesondere einwertige oder mehrwertige niedermolekulare Alkohole wie Methanol, Ethanol, n-Propanol, i-Propanol, Glykole oder Glycolether oder Glycerin in Frage. Eine bevorzugte organische Komponente ist i-Propanol.

Die Menge derartiger zusätzlicher Lösemittel sollte aber im Feuchtmittelumlauf im Regelfalle 30 Gew. % bezüglich der Gesamtmenge aller eingesetzten Lösemittel nicht überschreiten. Ein Konzentrat kann gegebenenfalls auch einen höheren Anteil aufweisen. Es ist der besondere Vorteil der erfindungsgemäß verwendeten Polymere, dass der Anteil organischer Bestandteile, d.h. vor allem Isopropanol, gegenüber dem Stand der Technik deutlich reduziert werden kann. Bevorzugt beträgt die Menge organischer Lösemittel weniger als 15 Gew. % bezüglich der Gesamtmenge aller eingesetzten Lösemittel. Insbesondere beträgt die Menge von flüchtigen organischen Lösemitteln mit einem Siedepunkt von nicht mehr als 100°C weniger als 10 Gew. %.

In einer bevorzugten Ausführungsform der Erfindung beträgt der Anteil von Isopropanol weniger als 10 Gew. %, besonders bevorzugt weniger 5 Gew. %, ganz besonders bevorzugt weniger als 4 Gew. % und beispielsweise ca. 3 Gew. %. In einer weiteren, bevorzugten Ausführungsform der Erfindung handelt es sich um ein Feuchtmittel, welches frei von Isopropanol ist.

Selbstverständlich können aber auch Gemische mehrerer verschiedener Polymere P eingesetzt werden. Die Konzentration der erfindungsgemäß eingesetzten Polymere P im Feuchtmittel wird vom Fachmann je nach den gewünschten Eigenschaften bestimmt. Sie beträgt im Regelfalle 10 bis 0,05 g/l, bevorzugt 5 bis 0,1 g/l, besonders bevorzugt 2 bis 0.2 g/l.

Bevorzugt werden nur eines oder mehrere der Polymere P eingesetzt. Das Feuchtmittel kann darüber hinaus aber noch weitere sekundäre Polymere zur Feineinstellung der Eigenschaften umfassen. Die Menge derartiger sekundärer Polymere sollte aber im Regelfalle 50 Gew.-%, bevorzugt 20 Gew.-%, besonders bevorzugt 10 Gew. % bezüglich der Gesamtmenge aller eingesetzten Polymere nicht übersteigen. Bevorzugt werden nur die Polymere P eingesetzt.

Die Auswahl derartiger sekundärer Polymerer ist nicht beschränkt, vorausgesetzt, die Verwendung hat keine unerwünschten Eigenschaften zur Folge. Beispiele geeigneter sekundärer Polymere umfassen Gummi arabicum, hochmolekulares Polyethylenglycol, hochmolekulares Polypropylenglycol oder Mischpolymere von Ethylen- und Propylenglycol. Der Fachmann trifft unter den prinzipiell möglichen Polymeren je nach den gewünschten Eigenschaften des Feuchtmittels eine geeignete Auswahl.

Das erfindungsgemäß eingesetzte Feuchtmittel kann darüber hinaus übliche Zusatzstoffe und Additive umfassen.

Zu nennen sind hier insbesondere übliche Puffersysteme zur Einstellung des gewünschten pH-Wertes. Beispiele umfassen in prinzipiell bekannter Art und Weise schwache Säuren wie organische Carbonsäuren, Hydroxycarbonsäuren oder Phosphorsäure im Gemisch mit deren Alkalimetallsalzen, wasserlöslichen Aminen oder Aminoalkoholen.

Der pH-Wert des eingesetzten Feuchtmittels beträgt üblicherweise 3 bis 9.

Beispiele weiterer Additive und Zusatzstoffe umfassen:
- Tenside und längerkettige Alkohole oder Diole zur Herabsetzung der Oberflächenspannung;
- Glycole, Glycolether und/oder Glycerin
- Entschäumer zur Reduzierung der durch die Tenside oder andere Inhaltsstoffe hervorgerufene Schaumbildung;
- Biozide zur Unterdrückung oder Verhinderung des Befalls mit Pilzen, Bakterien oder Hefen;
- Korrosionsinhibitoren zur Vermeidung von Korrosion an metallischen Werkstoffen;
- Komplexbildner zur Vermeidung von Ausfällung oder Ablagerungen von Calzium- oder Magnesiumsalzen;
- Trocknungsbeschleuniger;
- Solubilisatoren aus der Gruppe der Xylol- oder Cumolsulfonate.

Der Fachmann trifft unter den Additiven und Hilfsstoffen je nach den gewünschten Eigenschaften des Feuchtmittels eine geeignete Auswahl.

Die Herstellung des Feuchtmittels kann auf einfache Art und Weise durch intensives Mischen der Komponenten im Lösemittel erfolgen. Bevorzugt wird zunächst ein Feuchtmittelkonzentrat hergestellt, welches erst später, insbesondere erst vor Gebrauch mit Wasser sowie ggf. Isopropanol auf Einsatzkonzentration verdünnt wird. Das Feuchtmittel wird erfindungsgemäß in üblichen Verfahren zum Offsetdruck verwendet. Übliche Offsetverfahren umfassen im Regelfalle mindestens die folgenden Schritte:
- Montieren einer Offsetdruckplatte auf einen Druckzylinder,
- Versetzen des Druckzylinders in Rotation,
- Übertragen von Feuchtmittel mit Hilfe eines Feuchtwerkes auf die Druckplatte,
- Übertragen von Druckfarbe mit Hilfe eines Farbwerkes auf die Druckplatte,
- Übertragen der Druckfarbe von der Druckplatte auf einen rotierenden, die Druckplatte berührenden Gummituchzylinder,
- Übertragen der Druckfarbe vom Gummituchzylinder auf einen am Druckzylinder vorbeigeführten, diesen berührenden Bedruckstoff.

Es kann sich sowohl um Bogenoffset wie um Rollenoffsetdruck handeln. Besonders vorteilhaft ist das vorliegende Verfahren bei Feuchtwerken, die in der Regel zur Erzeugung von Schaum neigen. Dies sind beispielsweise sogenannte Bürsten- oder Schleuderfeuchtwerke, wie sie oft im Zeitungsdruck, dem Coldset, eingesetzt werden.

Die Feuchtmittel können vorher hergestellt werden, gegebenenfalls über ein Feuchtmittelkonzentrat, und danach in den Feuchtmittelkreislauf eingefüllt werden; man kann aber auch eines oder mehrere Polymere P in den bereits befüllten Feuchtmittelkreislauf eindosieren, vorteilhaft in Form eines Feuchtmittelkonzentrates.

Die erfindungsgemäße Verwendung der modifizierten, aminogruppenhaltige Polymere P führt zu deutlichen Verbesserungen. Die Platten werden schon bei wesentlich geringerer Wasserführung sicher befeuchtet, so dass sich beim Anlaufen des Druckens oder nach einer Unterbrechung die Anlaufmakulatur deutlich verringern lässt.

Die genannten Polymere lassen sich insbesondere in Feuchtmittelkonzentrate ohne Schwierigkeiten einformulieren. Sie besitzen keine schäumenden oder Schaumstabilisierenden Eigenschaften. Das Wasserfenster ist größer als bei den handelsüblichen Polymeren; dies gewährt höhere Produktionssicherheit. Die Polymere P verhalten sich inert gegenüber den druckenden Bereichen der Druckplatte. Somit ist eine hohe Auflagenstabilität der Platte gewährleistet.

Die folgenden Beispiele sollen die Erfindung näher illustrieren:

Für die Versuche wurde ein Feuchtmittelkonzentrat der folgenden Rezeptur eingesetzt:

| **Komponente** | **Menge [Gew. %]** | **Anmerkungen** |
|---|---|---|
| Polymerlösung (40% ige Lösung in Wasser) | 5,0 | d.h. 2,0 % Polymer |
| Citronensäure | 2,0 | |
| Trinatriumcitrat | 3,2 | |
| Glycerin | 3,0 | |
| Biozid | 3,0 | |
| Wasser | 83,8 | |
| Summe | 100,0 | |

### Beispiel:

Es wurde ein modifiziertes Polyethylenimin eingesetzt, herstellbar nach folgender Vorschrift:

In einem Vierhalskolben mit Metallrührer und Rückflusskühler wurden unter Stickstoffatmosphäre 196 g Polyethylenimin (wasserfrei, M_{w} = 25.000 g/mol (Lupasol^{®} WF, Fa. BASF AG)) gegeben und mit 588 g VE-Wasser auf 25% verdünnt. Es wurde unter Rühren auf 70°C aufgeheizt und bei dieser Temperatur wurden 40 ml einer 22 %-igen wässrigen Lösung eines Vernetzers zügig zugegeben. Der Vernetzer ist ein Umsetzungsprodukt eines Polyethylenglykols mit mittlerer Molmasse 1500 mit Epichlorhydrin. Nach beendeter Zugabe wurde die Mischung für 5 Stunden bei 70°C gerührt. Anschließend wurde auf 80°C aufgeheizt und bei dieser Temperatur innerhalb von 3 Stunden 263,2 g Acrylsäure zugetropft. Nach beendeter Zugabe wurde die Lösung bei 80°C für weitere 1 Stunden weitergerührt. Nach dem Abkühlen erhielt man eine viskose, gelb-orange Lösung des Produktes mit einem Feststoffgehalt von 42% (2h, Vakuum/120°C) und einem K-Wert (1% in Wasser) von 17.

Die erhaltene Lösung wurde ohne weitere Reinigung zur Herstellung des Feuchtmittelkonzentrates eingesetzt.

### Vergleichsbeispiel:

Anstelle des modifizierten Polyethylenimins wurde als Polymer Gummi arabicum (Agum Z, Fa. Eggen) eingesetzt.

Das Feuchtmittelkonzentrat wurde jeweils durch intensives Mischen aller Komponenten erzeugt.

Das Polymer gemäß Beispiel ließ sich problemlos in das Konzentrat einarbeiten. Es wurden keine Löslichkeits- oder Verträglichkeitsprobleme festgestellt.

Im Gegensatz hierzu muss Gummi arabicum entweder in Wasser vorgequollen und dann verdünnt werden, oder es muss vergleichsweise teures "Instantpulver" von Gummiarabicum eingesetzt werden.

### Offset-Druckversuche:

Die Druckversuche wurden auf eine Heidelberger Speedmaster 74 Z Bogenoffset-Druckmaschine durchgeführt. Als Druckform wurde eine handelsübliche konventionelle Positiv-Offsetdruckplatte eingesetzt. Gedruckt wurde mit einer handelsüblichen roten Druckfarbe (K+E Novavit^{®} 2 F 700 Magenta). Die Menge an Feuchtmittel (Feuchtmittelführung) wurde in üblicher Art und Weise durch die Drehgeschwindigkeit des Feuchtduktors bestimmt. Die Mengenangabe erfolgt in relativen Einheiten (Potentiometerstellung 0 = keine Drehung des Feuchtwalzenwerks, 100 maximale einstellbare Drehgeschwindigkeit). Je höher der Wert, desto mehr Feuchtmittel wird auf den Druckzylinder übertragen.

Die Feuchtmittel wurden aus den oben genannten Konzentraten nach folgendem Rezept hergestellt:

| **Komponente** | **Menge** |
|---|---|
| Feuchtmittelkonzentrat | 3 Vol. % |
| Isopropanol | 3 Vol. % |
| Wasser, 8° d | 94 Vol. % |
| Summe | 100 Vol. % |

### Bestimmung der unteren Grenze des Wasserfensters (sogenanntes "Freilaufen")

Es wurde zunächst die untere Grenze des Wasserfensters bestimmt, also diejenige Mindestmenge an Feuchtmittel, die notwendig ist, damit die hydrophilen Stellen der Offsetdruckplatte beim Drucken so gut benetzt werden, damit sie keine Druckfarbe mehr annehmen und somit ordnungsgemäßes Drucken möglich ist.

| | Einstellung Feuchtwerk (Potentiometerstellung) |
|---|---|
| Beispiel | 17 |
| Vergleichsbeispiel | 29 |

Es ist deutlich, dass das erfindungsgemäße Feuchtmittel mit dem Polyethylenimin-Derivat bereits bei einer sehr viel niedrigeren Wasserführung einen stabilen Wasserfilm auf der Platte bewirkt als das Feuchtmittel gemäß Stand der Technik mit Gummi arabicum.

### Wassergehalt auf der Platte im Wasserfenster

In einem Druckversuch wurde die Menge an Wasser in der Farbe, d.h. in den hydrophoben Bereichen, sowie auf der Platte, d.h. in den hydrophilen Bereichen gemessen. Die Werte wurden mittels einer sogenannten Graphometronic-Apparatur gemessen. Diese erfasst den Wassergehalt in Relation zu einem Standard mittels NIR.

Die zum Test verwendete Offsetdruckplatte wies Zonen mit hoher Farbabnahme sowie Zonen niedriger Farbabnahme auf. "Zone hoher Farbannahme" bedeutet, dass in diesem Bereich der Anteil druckender Fläche relativ groß und der Anteil nicht druckender Flächen relativ klein ist. Bei "Zonen geringer Farbannahme" ist umgekehrt in diesem Bereich der Anteil druckender Fläche relativ klein und der Anteil nicht druckender Flächen relativ groß.

Es wurde jeweils der Wassergehalt in den druckenden Bereichen in Zonen hoher sowie in Zonen niedriger Farbannahme bestimmt. Weiterhin wurde der Wassergehalt in den nicht druckenden Bereichen auf der Platte in Nachbarschaft zu druckenden Zonen mit hoher Farbabnahme und mit geringer Farbabnahme bestimmt.

Ziel einer Feuchtmittelrezeptur ist dabei, schon bei niedriger Potentiometerstellung eine für das Freilaufen ausreichende Wasserkonzentration in den nichtdruckenden Bereichen zu erzeugen, auch wenn diese von Zonen hoher Farbbelegung umgeben sind.

In den Bereichen der Druckform, in denen Zonen niedriger Farbbelegung in Nachbarschaft zu großen nichtdruckenden Bereichen stehen, kommt es leicht zu einem Überemulgieren der Farbe; dies äußert sich neben einem Verlust von Tack und Viskosität in einem Verlust an Farbstärke. In dem vorliegenden Experiment gab es keine Hinweise auf einen Verlust an Farbstärke bei hoher Potentiometerstellung.

Die Messergebnisse sind im Einzelnen in den Tabellen 1 und 2 zusammengestellt.

**Tabelle 1: Messwerte Beispiel**

| Wasserführung/ Potentiometereinstellung [rel. Einheiten] | Wasserkonzentration im Vergleich zu Standard | | | | Dichte Vollton | |
|---|---|---|---|---|---|---|
| | Druckende Bereiche | Nicht druckende Bereiche | Druckende Bereiche | Nicht druckende Bereiche | | |
| | Zonen hoher Farbannahme | Zonen hoher Farbannahme | Zonen geringer Farbannahme | Zonen geringer Farbannahme | Zonen hoher Farbannahme | Zonen geringer Farbannahme |
| 17 | 13,8 | 8,8 | 20 | 8,4 | 1,63 | 1,65 |
| 20 | 15,1 | 11,1 | 22,3 | 10 | 1,64 | 1,63 |
| 23 | 16,4 | 13,1 | 24,4 | 12,1 | 1,61 | 1,59 |
| 26 | 17,7 | 14,1 | 26,5 | 13,8 | 1,64 | 1,55 |
| 29 | 19 | 14,6 | 28,6 | 15,3 | 1,65 | 1,54 |

**Tabelle 2: Messwerte Vergleichsbeispiel**

| Wasserführung/ Potentiometereinstellung | Wasserkonzentration im Vergleich zu Standard | | | | Dichte Vollton | |
|---|---|---|---|---|---|---|
| | Druckende Bereiche | Nicht druckende Bereiche | Druckende Bereiche | Nicht druckende Bereiche | | |
| | Zonen hoher Farbannahme | Zonen hoher Farbannahme | Zonen geringer Farbannahme | Zonen geringer Farbannahme | Zonen hoher Farbannahme | Zonen geringer Farbannahme |
| 29 | 13 | 8,4 | 19,9 | 10 | 1,65 | 1,61 |
| 32 | 15,2 | 13,6 | 22,6 | 13,4 | 1,67 | 1,60 |
| 35 | 16,3 | 16,4 | 26 | 17,5 | 1,63 | 1,59 |
| 38 | 17,4 | 17,8 | 28,4 | 19,7 | 1,65 | 1,53 |
| 41 | 18,6 | 18,5 | 31,5 | 21,9 | 1,63 | 1,52 |

Sowohl das Beispiel wie das Vergleichsbeispiel zeigen den üblichen Trend, dass mit zunehmender Wasserführung auch mehr Wasser in der Farbe sowie auf der Platte mittels Graphometronic festgestellt werden kann.

Im vorliegenden Fall wurde die Wasserführung nicht weiter erhöht, nachdem die Dichten Vollton unter den Wert von ca. 1,6 bzw. 1,52 gefallen waren. Bei höheren Wasserwerten traten Farbübertragungsstörungen aufgrund zu hohen Wasseranteils in der Farbe auf.

Bei erfindungsgemäßer Verwendung der Polymere P wird bereits bei niedriger Wasserführung die notwendige Wassermenge auf den nichtdruckenden Bereichen der Platte erhalten (Beispiel 8,8 bei Einstellung 17 und Vergleichsbeispiel 8,4 bei Einstellung 29), die zum "Freilaufen" der Platte erforderlich ist. Das Polymer ist also in der Lage, auch bei niedrigem Wasserangebot bereits einen stabilen Film auf der Platte zu erzeugen.

In den druckenden Bereichen mit hoher Farbbelegung ist im Beispiel wie im Vergleichsbeispiel die gleiche Menge an Wasser in der Farbe, und die Volltondichten sind ebenfalls vergleichbar.

In den Bereichen niedriger Wasserführung ist dagegen mehr Wasser auf der Platte (nichtdruckende Bereiche) sowie in der Farbe, was zu einem stärkeren Verlust der Volltondichte führt.

Für den Drucker ist es wichtig, relativ zum Ausgangswert (Potentiometereinstellung) ein breites Wasserfenster zur Verfügung zu haben. Das Wasserfenster ist im Falle des Beispiels bezogen auf den Ausgangswert 70 % groß, im Fall des Vergleichsbeispiels lediglich 40 %.

## Patentansprüche

1. Verwendung von Polymeren zur Herstellung von Feuchtmitteln oder Feuchtmittelkonzentraten für den Offsetdruck, **dadurch gekennzeichnet, dass** es sich um mindestens ein Polymer P handelt, welches mit Säuregruppen modifizierte Aminogruppen umfasst.

2. Verwendung von Polymeren als Zusatz zu Feuchtmittelkreisläufen für den Offsetdruck, **dadurch gekennzeichnet, dass** es sich um mindestens ein Polymer P handelt, welches mit Säuregruppen modifizierte Aminogruppen umfasst.

3. Verwendung gemäß Anspruch 1 oder 2, **dadurch gekennzeichnet, dass** es sich bei den mit Säuregruppen modifizierten Aminogruppen um Struktureinheiten der allgemeinen Formel ausgewählt aus der Gruppe von 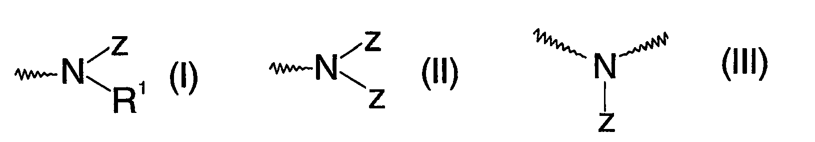 handelt, und wobei R¹ und Z die folgende Bedeutung haben:
R¹ : H oder eine geradkettiger oder verzweigter, vorzugsweise 1 bis 20 C- Atome umfassenden Kohlenwasserstoffrest,
Z: eine Gruppe der allgemeinen Formel -XR²ₙ, wobei es sich bei X um einen n-wertigen organischen Rest und bei n um eine natürliche Zahl größer oder gleich 1 und bei R² um eine Säuregruppe ausgewählt aus der Gruppe von -COOH, -SO₃H oder -PO₃H₂ und/oder deren Salzen handelt.

4. Verwendung gemäß Anspruch 3, **dadurch gekennzeichnet, dass** es sich bei Z um mindestens eine Gruppe ausgewählt aus der Gruppe von -CH₂SO₃H, - CH₂CH₂SO₃H, -CH₂CH₂PO₃H₂, -CH₂PO₃H₂, -CH₂COOH, -CH₂CH₂COOH, - CH(COOH)CH₂-COOH, -CH₂CH(CH₃)COOH, -CH₂CH(CH₂COOH)COOH und/oder deren Salzen handelt.

5. Verwendung gemäß Anspruch 4, **dadurch gekennzeichnet, dass** es sich bei Z um CH₂-COOH und -CH₂CH₂COOH handelt.

6. Verwendung gemäß einem der Ansprüche 1 bis 5, **dadurch gekennzeichnet, dass** die eingesetzten Polymere P durch Modifizierung von Polyvinylamin und/oder Polyethylenimin erhältlich sind.

7. Verwendung gemäß Anspruch 6, **dadurch gekennzeichnet, dass** es sich um ein vernetztes Polyvinylamin und/oder Polyethylenimin handelt.

8. Verwendung gemäß einem der Ansprüche 1 bis 7, **dadurch gekennzeichnet, dass** der Anteil von flüchtigen organischen Lösemitteln mit einem Siedepunkt von nicht mehr als 100°C im Feuchtmittel weniger als 15 Gew. % beträgt.

9. Verwendung gemäß einem der Ansprüche 1 bis 7, **dadurch gekennzeichnet, dass** es sich um ein Feuchtmittel handelt, welches frei von Isopropanol, Ethanol oder Mischungen davon ist.

10. Verfahren zum Drucken mittels Offsettechnik, umfassend mindestens die folgenden Schritte,
• Montieren einer Offsetdruckplatte auf einen Druckzylinder,
• Versetzen des Druckzylinders in Rotation,
• Übertragen von Feuchtmittel mit Hilfe eines Feuchtwerkes auf die Druckplatte,
• Übertragen von Druckfarbe mit Hilfe eines Farbwerkes auf die Druckplatte,
• Übertragen der Druckfarbe von der Druckplatte auf einen rotierenden, die Druckplatte berührenden Gummituchzylinder,
• Übertragen der Druckfarbe vom Gummituchzylinder auf einen am Druckzylinder vorbeigeführten, diesen berührenden Bedruckstoff,
**dadurch gekennzeichnet, dass** das eingesetzte Feuchtmittel mindestens
- Wasser, sowie
- mindestens ein Polymer P umfasst, welches mit Säuregruppen modifizierte Aminogruppen umfasst.

11. Verfahren gemäß Anspruch 10, **dadurch gekennzeichnet, dass** es sich bei den mit Säuregruppen modifizierten Aminogruppen um Struktureinheiten der allgemeinen Formel ausgewählt aus der Gruppe von 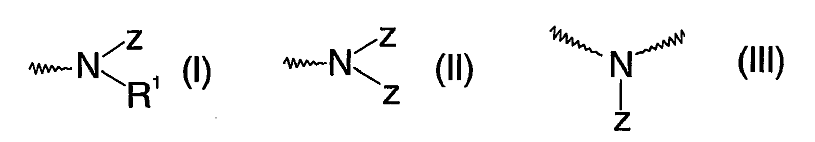 handelt, und wobei R¹ und Z die folgende Bedeutung haben:
R¹ : H oder eine geradkettiger oder verzweigter, vorzugsweise 1 bis 20 C- Atome umfassenden Kohlenwasserstoffrest,
Z: eine Gruppe der allgemeinen Formel -XR²ₙ, wobei es sich bei X um einen n-wertigen organischen Rest und bei n um eine natürliche Zahl größer oder gleich 1 und bei R² um eine Säuregruppe ausgewählt aus der Gruppe von -COOH, -SO₃H oder -PO₃H₂ und/oder deren Salzen handelt.

12. Verfahren gemäß Anspruch 11, **dadurch gekennzeichnet, dass** es sich bei Z um mindestens eine Gruppe ausgewählt aus der Gruppe von -CH₂CH₂SO₃H, - CH₂SO₃H , -CH₂CH₂PO₃H₂ -CH₂PO₃H₂, -CH₂COOH, -CH₂CH₂COOH, - CH(COOH)CH₂-COOH, -CH₂CH(CH₃)COOH, -CH₂CH(CH₂COOH)COOH und/oder deren Salzen handelt.

13. Verfahren gemäß Anspruch 12, **dadurch gekennzeichnet, dass** es sich bei Z um CH₂-COOH und -CH₂CH₂COOH handelt.

14. Verfahren gemäß einem der Ansprüche 9 bis 13, **dadurch gekennzeichnet, dass** die eingesetzten Polymere durch Modifizierung von Polyvinylamin und/oder Polyethylenimin erhältlich sind.

15. Verfahren gemäß Anspruch 14, **dadurch gekennzeichnet, dass** es sich um ein vernetztes Polyvinylamin und/oder Polyethylenimin handelt.

16. Verfahren gemäß einem der Ansprüche 9 bis 15, **dadurch gekennzeichnet, dass** der Anteil von flüchtigen organischen Lösemitteln mit einem Siedepunkt von nicht mehr als 100°C im Feuchtmittel weniger als 15 Gew. %. beträgt.

17. Verfahren gemäß einem der Ansprüche 9 bis 15, **dadurch gekennzeichnet, dass** es sich um ein Feuchtmittel handelt, welches frei von Isopropanol, Ethanol oder Mischungen davon ist.

18. Verfahren gemäß einem der Ansprüche 9 bis 17, **dadurch gekennzeichnet, dass** man zunächst ein Feuchtmittelkonzentrat herstellt, welches das Polymer P enthält, und hieraus das Feuchtmittel durch Verdünnen erhält.

19. Verfahren gemäß einem der Ansprüche 9 bis 17, **dadurch gekennzeichnet dass** man das Polymer P direkt im Feuchtmittelumlauf löst.

## Claims

1. Use of polymers to produce fountain solutions or fountain solution concentrates for offset printing, **characterised in that** the polymers are at least one polymer P comprising amino groups modified by acid groups.

2. Use of polymers as an additive to fountain solution circuits for offset printing, **characterised in that** the polymers are at least one polymer P comprising amino groups modified by acid groups.

3. Use according to claim 1 or 2, **characterised in that** the amino groups modified by acid groups are structural units of the general formula selected from the group 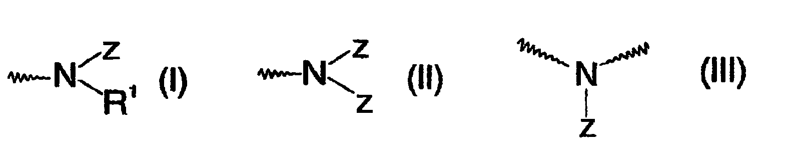 wherein R¹ and Z have the following meaning:
R¹: H or a straight-chain or branched hydrocarbon radical containing preferably from 1 to 20 carbon atoms,
Z: a group of the general formula -XR²ₙ, wherein X is an n-valent organic radical and n is a natural number greater than or equal to 1, and R² is an acid group selected from the group -COOH, -SO₃H and -PO₃H₂ and/or their salts.

4. Use according to claim 3, **characterised in that** Z is at least one group selected from the group -CH₂SO₃H, -CH₂CH₂SO₃H, -CH₂CH₂PO₃H₂, -CH₂PO₃H₂, -CH₂COOH, -CH₂CH₂COOH, -CH(COOH)CH₂-COOH, -CH₂CH(CH₃)COOH, -CH₂CH(CH₂COOH)COOH and/or their salts.

5. Use according to claim 4, **characterised in that** Z is CH₂-COOH and -CH₂CH₂COOH.

6. Use according to any one of claims 1 to 5, **characterised in that** the polymers P that are used are obtainable by modification of polyvinylamine and/or polyethyleneimine.

7. Use according to claim 6, **characterised in that** the polymer P is a crosslinked polyvinylamine and/or polyethyleneimine.

8. Use according to any one of claims 1 to 7, **characterised in that** the proportion of volatile organic solvents having a boiling point of not more than 100°C in the fountain solution is less than 15 wt.%.

9. Use according to any one of claims 1 to 7, **characterised in that** the fountain solution is free of isopropanol, ethanol or mixtures thereof.

10. Process for printing by means of the offset technique, comprising at least the following steps:
• mounting an offset printing plate on a printing cylinder,
• causing the printing cylinder to rotate,
• transferring fountain solution to the printing plate by means of a dampening unit,
• transferring printing ink to the printing plate by means of an inking unit,
• transferring the printing ink from the printing plate to a rotating blanket cylinder in contact with the printing plate,
• transferring the printing ink from the blanket cylinder to a print substrate which is guided past the printing cylinder in contact therewith,
**characterised in that** the fountain solution used comprises at least
- water as well as
- at least one polymer P comprising amino groups modified by acid groups.

11. Process according to claim 10, **characterised in that** the amino groups modified by acid groups are structural units of the general formula selected from the group 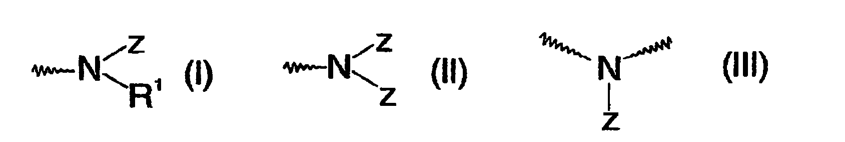 wherein R¹ and Z have the following meaning:
R¹: H or a straight-chain or branched hydrocarbon radical containing preferably from 1 to 20 carbon atoms,
Z: a group of the general formula -XR²ₙ, wherein X is an n-valent organic radical and n is a natural number greater than or equal to 1, and R² is an acid group selected from the group -COOH, -SO₃H and -PO₃H₂ and/or their salts.

12. Process according to claim 11, **characterised in that** Z is at least one group selected from the group -CH₂CH₂SO₃H, -CH₂SO₃H, -CH₂CH₂PO₃H₂, -CH₂PO₃H₂, -CH₂COOH, -CH₂CH₂COOH, -CH(COOH)CH₂-COOH, -CH₂CH(CH₃)COOH, -CH₂CH(CH₂COOH)COOH and/or their salts.

13. Process according to claim 12, **characterised in that** Z is CH₂-COOH and -CH₂CH₂COOH.

14. Process according to any one of claims 9 to 13, **characterised in that** the polymers that are used are obtainable by modification of polyvinylamine and/or polyethyleneimine.

15. Process according to claim 14, **characterised in that** the polymer is a crosslinked polyvinylamine and/or polyethyleneimine.

16. Process according to any one of claims 9 to 15, **characterised in that** the proportion of volatile organic solvents having a boiling point of not more than 100°C in the fountain solution is less than 15 wt.%.

17. Process according to any one of claims 9 to 15, **characterised in that** the fountain solution is free of isopropanol, ethanol or mixtures thereof.

18. Process according to any one of claims 9 to 17, **characterised in that** a fountain solution concentrate containing the polymer P is first prepared, and the fountain solution is obtained therefrom by dilution.

19. Process according to any one of claims 9 to 17, **characterised in that** the polymer P is dissolved directly in the circulating fountain solution.

## Revendications

1. Utilisation de polymères pour préparer des agents d'humidification ou des concentrés d'agents d'humidification, pour l'impression offset, **caractérisée en ce qu'**il s'agit d'au moins un polymère P qui comprend des groupes amino modifiés par des groupes acides.

2. Utilisation de polymères à titre d'additifs pour circuits d'agents d'humidification pour l'impression offset, **caractérisée en ce qu'**il s'agit d'au moins un polymère P qui comprend des groupes amino modifiés par des groupes acides.

3. Utilisation selon la revendication 1 ou 2, **caractérisée en ce que**, quant aux groupes amino modifiés par des groupes acides, il s'agit de motifs structuraux de formule générale choisie dans le groupe de 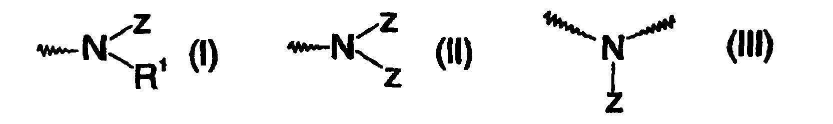 et R¹ et Z ayant la signification suivante :
R¹: représente H ou un radical hydrocarboné linéaire ou ramifié, comprenant de préférence de 1 à 20 atomes de C,
Z : représente un groupe de formule générale -XR²ₙ, dans laquelle, quant à X, il s'agit d'un radical organique de valence n et quant à n il s'agit d'un nombre naturel supérieur ou égal à 1, et quant à R², il s'agit d'un groupe acide choisi dans le groupe formé par -COOH, - SO₃H ou -PO₃H₂, et/ou leurs sels.

4. Utilisation selon la revendication 3, **caractérisée en ce que**, quant à Z il s'agit au moins d'un groupe choisi dans le groupe formé par CH₂SO₃H, -CH₂CH₂SO₃H, -CH₂CH₂PO₃H₂, -CH₂PO₃H₂, -CH₂COOH, -CH₂CH₂COOH, -CH(COOH)CH₂-COOH, -CH₂CH(CH₃)COOH, -CH₂CH(CH₂COOH)COOH et/ou leurs sels.

5. Utilisation selon la revendication 4, **caractérisée en ce que**, quant à Z, il s'agit de -CH₂COOH et de -CH₂CH₂COOH.

6. Utilisation selon l'une quelconque des revendications 1 à 5, **caractérisée en ce que** les polymères P mis en oeuvre peuvent être obtenus par modification de polyvinylamine et/ou polyéthylène-imine.

7. Utilisation selon la revendication 6, **caractérisée en ce qu'**il s'agit d'une polyvinylamine et/ou polyéthylène-imine réticulée.

8. Utilisation selon l'une quelconque des revendications 1 à 7, **caractérisée en ce que** la proportion de solvants organiques volatiles ayant un point d'ébullition ne dépassant pas 100°C est de moins de 15% en poids dans l'agent d'humidification.

9. Utilisation selon l'une quelconque des revendications 1 à 7, **caractérisée en ce qu'**il s'agit d'un agent d'humidification qui est exempt d'isopropanol, d'éthanol ou de mélanges de ceux-ci.

10. Procédé pour imprimer au moyen d'une technique offset, comprenant au moins les étapes suivantes,
• montage d'une plaque d'impression offset sur un cylindre d'impression,
• mise en rotation du cylindre d'impression,
• transfert d'agents d'humidification sur la plaque d'impression à l'aide de dispositifs d'humidification,
• transfert de l'encre d'impression sur la plaque d'impression à l'aide d'un mécanisme d'encrage,
• Transfert de l'encre d'impression à partir de la plaque d'impression sur un cylindre porte-blanchet tournant en contact avec la plaque d'impression,
• Transfert de l'encre d'impression à partir du cylindre porte-blanchet sur une matière d'impression passant sur un cylindre d'impression, en contact avec celui-ci,
**caractérisé en ce que** l'agent d'humidification mis en oeuvre comprend au moins
- de l'eau, ainsi que
- au moins un polymère P, qui comprend des groupes amino modifiés par des groupes acides.

11. Procédé selon la revendication 10, **caractérisé en ce que**, quant aux groupes amino modifiés par des groupes acide, il s'agit de motifs structuraux de formule générale choisie dans le groupe de 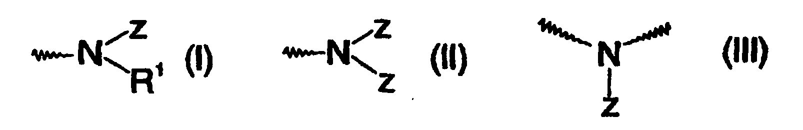 et R¹ et Z ayant la signification suivante :
R¹: représente H ou un radical hydrocarboné linéaire ou ramifié, comprenant de préférence de 1 à 20 atomes de C,
Z : représente un groupe de formule générale -XR²ₙ, dans laquelle, quant à X, il s'agit d'un radical organique de valence n et quant à n il s'agit d'un nombre naturel supérieur ou égal à 1, et quant à R² il s'agit d'un groupe acide choisi dans le groupe formé par -COOH, - SO₃H ou -PO₃H₂, et/ou leurs sels.

12. Procédé selon la revendication 11, **caractérisé en ce que**, quant à Z, il s'agit au moins d'un groupe choisi dans le groupe formé par -CH₂CH₂SO₃H, CH₂SO₃H, -CH₂CH₂PO₃H₂, -CH₂PO₃H₂, -CH₂COOH, - CH₂CH₂COOH, -CH(COOH)CH₂-COOH, -CH₂CH(CH₃)COOH, - CH₂CH(CH₂COOH)COOH et/ou leurs sels.

13. Procédé selon la revendication 12, **caractérisé en ce que**, quant à Z, il s'agit de -CH₂COOH et de -CH₂CH₂COOH.

14. Procédé selon l'une quelconque des revendications 9 à 13, **caractérisé en ce que** les polymères mis en oeuvre peuvent être obtenus par modification de polyvinylamine et/ou polyéthylène-imine.

15. Procédé selon la revendication 14, **caractérisée en qu'**il s'agit d'une polyvinylamine et/ou polyéthylène-imine réticulée.

16. Procédé selon l'une quelconque des revendications 9 à 15, **caractérisé en ce que**, la proportion de solvants organiques volatiles ayant un point d'ébullition ne dépassant pas 100°C est de moins de 15% en poids dans l'agent d'humidification.

17. Procédé selon l'une quelconque des revendications 9 à 15, **caractérisé en ce qu'**il s'agit d'un agent d'humidification, qui est exempt d'isopropanol, d'éthanol ou de mélanges de ceux-ci.

18. Procédé selon l'une quelconque des revendications 9 à 17, **caractérisé en ce que** l'on prépare d'abord un concentré d'agents d'humidification, lequel contient le polymère P, et à partir de cela, on obtient l'agent d'humidification par dilution.

19. Procédé selon l'une quelconque des revendications 9 à 17, **caractérisé en ce que** le polymère P est directement dissout dans le circuit d'agents d'humidification.
